# EUROPEAN PATENT APPLICATION

(11) **EP 1 588 623 A1**
(43) Date of publication of application: **26.10.2005**
(21) Application number: 02790907.6
(22) Date of filing: 26.12.2002
(51) Int. Cl.: A22C 25/02

(54) **FISH SCALING MACHINE**

(71) Applicant: Ryubi Co., Ltd., Kawasaki-shi, Kanagawa 214-0021 (JP)
(72) Inventor: GOTO, Fumihiro, Yokohama-shi, Kanagawa 225-0023 (JP)
(74) Representative: Condon, Neil
(86) International application number: PCT/JP2002/013673
(87) International publication number: WO 2004/060070

(57) **Abstract**

A scale (102A) on a surface f a fish body (100) is vertically or generally vertically raised by the injection of a pressure water (20) from a first water injection nozzle row (28) and the same scale (102A) already raised is removed from the fish body (100) by the injection of a pressure water from a just next water injection nozzle row (30). There is provided a water pressure adjustment section (34) to apply a uniform water pressure to the surface of the fish body in spite of variation in thee surface of the fish body to be scaled by these water injection nozzle rows.

## Description

### TECHNICAL FIELD

This invention relates to a fish scaling machine usable to remove scales of a fish body before it is cooked and more particularly to an improvement on a fish scaling machine adapted to continuously remove the scales of a lot of fish.

### BACKGROUND OF TECHNOLOGY

Various fish scaling machines to continuously scale a lot of fish by applying a spray of water onto thee fish have been proposed in JP54-141297A, JP55-54315U, JP55-60788U, JP60-2780A, JP4-228023A and JP5-49387A.

Such fish scaling machines generally comprises upper and lower conveyor means attached on a machine frame to convey fish bodies to be scaled while being held between them and upper and lower water injection means to inject high pressure water onto scales of the fish bodies at their position exposed from the conveyor means in an exposed position thereof. The upper and lower water injection means comprises an injection nozzle or nozzles disposed with an injection angle of 3 through 25° and in case where it has the injection nozzles, the water injected from the injection nozzles is simultaneously sprayed onto the scales of the fish bodies (see JP60-2780U).

Since the prior arts disclosed in JP54-141297A, JP55-54315U, JP55-60788U and JP60-2780U, JP4-228023A and JP5-49387A among the aforementioned prior arts are adapted to scale the fish bodies by injecting the water in the form of water knife or shower from each of the injection nozzles, the water pressure is required to be considerably high. However, as the water pressure is increased, the taste of fish meat will be possibly worsened, but as the water pressure of the injection nozzles is lowered, the fish bodies cannot be disadvantageously fully scaled.

On the other hand, JP4-228023A and JP5-49387A disclose the art proposed by the applicant and according to this art, since the water is continuously sprayed by more than two stage injections onto the same one scale of the fish body as it is conveyed, the predetermined one scale of the fish body is vertically or generally vertically raised by the first stage water injection and is effectively removed by the next stage water injection. Thus, since the scale can be effectively removed from the fish body even though the pressure of water to be sprayed onto the scale pressure is lowered, the fish scaling operation can be done without any deterioration of the taste of the fish meat. In this manner, as a plurality of injections of water having a low pressure are continuously done from the same direction, the scaling function gets substantially equal to a single injection of water having a high pressure and therefore the scale can be effectively removed while the taste of fish is maintained.

There is among the prior arts a fish scaling machine having one of the upper and lower conveyor means vertically adjustable in position together with the water injection means (the water injection nozzles) (see JP5-49387A). Since this machine has one of the conveyor means and the water injection means adjustable in position in accordance with the thickness of the fish bodies to be scaled, all the water injection nozzles are positioned in the same height position over the whole height of the fish bodies (the length of the back of the fish to the belly thereof) relative to the flat surface of the conveyor to convey the fish bodies.

However, among the fish to be scaled are not only a generally flat one such as flounder, but also a lot of fish having a curved cross section varying in its thickness in the upward and downward direction thereof (the direction from the back to the belly or reversely). If the distance between the water injection means and the horizontal conveying surface of the conveyor is constant over the whole height of the fish bodies and if the thickness of the one fish body varies in thickness in the upward and downward directions, the pressure of water striking the surface of the fish body changes in accordance with the variation in the thickness of the fish body. As a result, thee degree in which the scale of the fish is removed will vary in accordance with the variation in the thickness of the fish body and therefore the scale cannot be uniformly removed over the whole surface of the fish.

Moreover, although the nozzles to spray the water onto the surface of the fish injects the water from the openings of the nozzles so that the water fans out, the pressure of the water fanning out when it strikes the fish body gets higher at the center of the fan bottom, but lower on both sides of the fan bottom and therefore the pressure of the water injected from the same water injection nozzle changes in accordance with the position of the fish body where the water hits the fish body. This also prevents the scales from being removed from the fish body uniformly.

One of the objects of the invention is to provide a fish scaling machine adapted to remove scales uniformly from a fish body even though it has its thickness varying in its upward and downward direction and therefore the surfaces curved.

Another object of the invention is to provide a fish scaling machine adapted to remove scales uniformly from a fish body over the whole surface portions thereof even though the water fans out from water injection nozzles.

### DISCLOSURE OF THE INVENTION

According to a first aspect of the invention, there is provided a fish scaling machine comprising upper and lower conveyor means attached on a machine frame to convey fish bodies to be scaled while being held between them and water injection means to inject high pressure water onto scales of the fish bodies on the conveyor means., the water injection means having more than two rows of water injection nozzles disposed close to each other in a manner shifted to each other in a direction of conveyance of the fish bodies to continuously spray a water onto the same scale or scales of the fish body in more than two stages in accordance with the conveyance of the fish body from the generally same direction, the water injection means characterized by further including water pressure adjustment sections to apply a uniform pressure of water from the rows of the water injection nozzles in spite of variation in the surface of the fish body to be scaled.

These water pressure adjustment sections may be set (1) by making constant a distance from the opening of every water injection nozzle to respective surface portions of the fish body so that the water sprayed from all the water injection nozzles has the uniform pressure at the respective surface portions of the fish body or (2) by adjusting the pressure of water sprayed from every water injection nozzle so that the water sprayed from all the water injection nozzles has the uniform pressure at the respective surface portions of the fish body.

In this manner, with the distance from the opening of every water injection nozzle to respective surface portions of the fish body being made constant or the water pressure adjusted so that the water sprayed from all the water injection nozzles has the uniform pressure at the respective surface portions of the fish body, the distance (injection distance) from all the water injection nozzles to the surface of the fish body is made constant even though the surface of the fish body is curved due to variation in its thickness and therefore the same pressure of water can be applied all over the surface of the fish body whereby the fish can be uniformly scaled in spite of the curved surface of the fish.

According to another aspect of the invention, there is provided a fish scaling machines comprising upper and lower conveyor means attached on a machine frame to convey fish bodies to be scaled while being held between them and water injection means to inject high pressure water onto scales of the fish bodies on the conveyor means; the water injection means having more than two rows of water injection nozzles disposed close to each other in a manner shifted to each other in a direction of conveyance of the fish bodies to continuously spray water onto the same scale or scales of each of the fish bodies in more than two stages in accordance with the conveyance of the fish body from the generally same direction; the water injection means characterized by further including water pressure adjustment sections to apply a uniform pressure of water from the rows of water injection nozzles in spite of variation in the surface of the fish body to be scaled and said more than two rows of water injection nozzles being disposed in a manner shifted from each other in a width direction.

In this manner, with the more than two water injection nozzles to continuously spray the water onto the same scales of the fish body disposed in a manner shifted from each other in the width direction, the surface portion of the fish body struck by the water in the middle of the spreading wide portion of the injection water fanning out from the forward water injection nozzle is struck by the water in either of the sides of the spreading wide portion of the injection water fanning out from the next rearward water injection nozzle or reversely the surface portion of the fish body struck by the water in either of the sides of the spreading wide portion of the injection water fanning out from the forward water injection nozzle is struck by the water in the middle of the spreading wide portion of the injection water fanning out from the next rearward water injection nozzle whereby the pressure of water striking the same scale from both of the forward and backward water injection nozzles gets uniform by the combination of the forward and backward injection waters so that the scales can be uniformly removed.

### BRIEF DESCRIPTION OF THE DRWAINGS

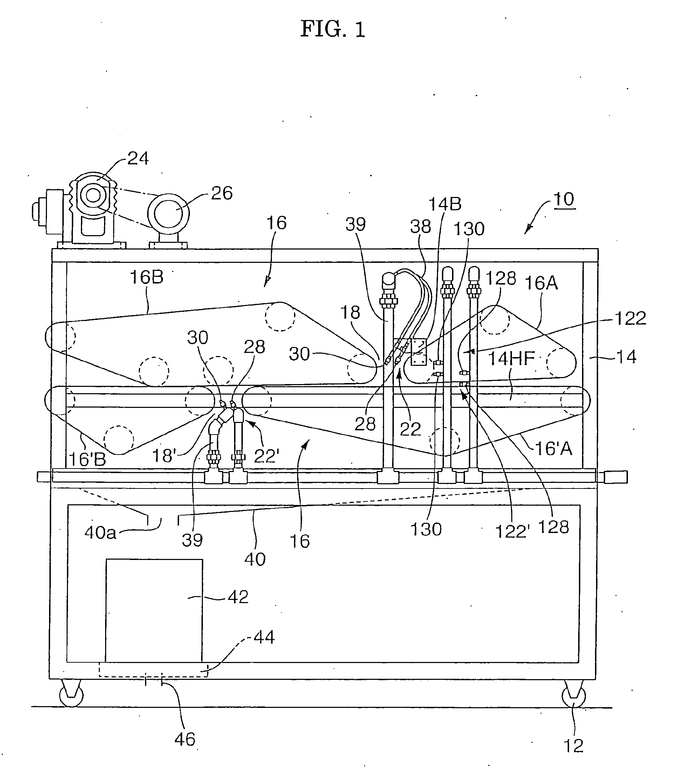

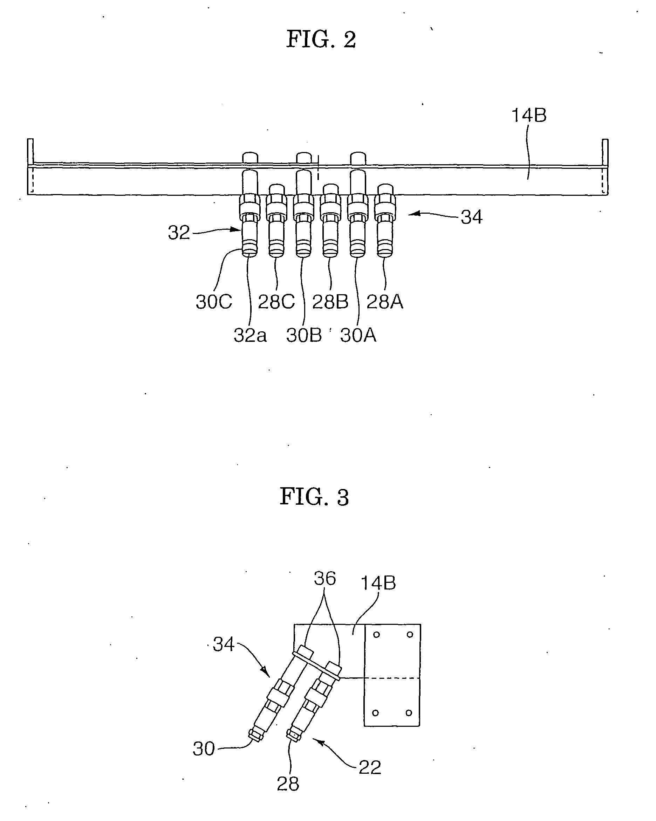

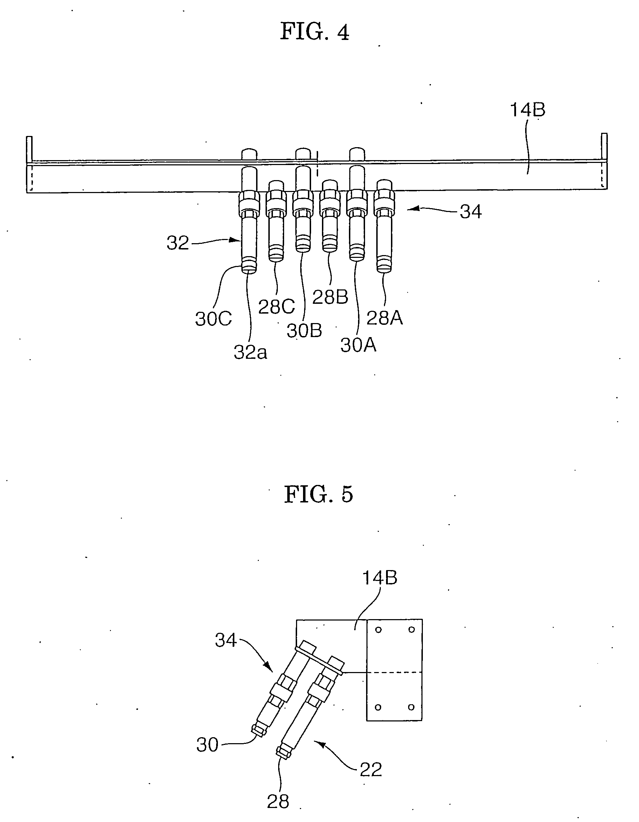

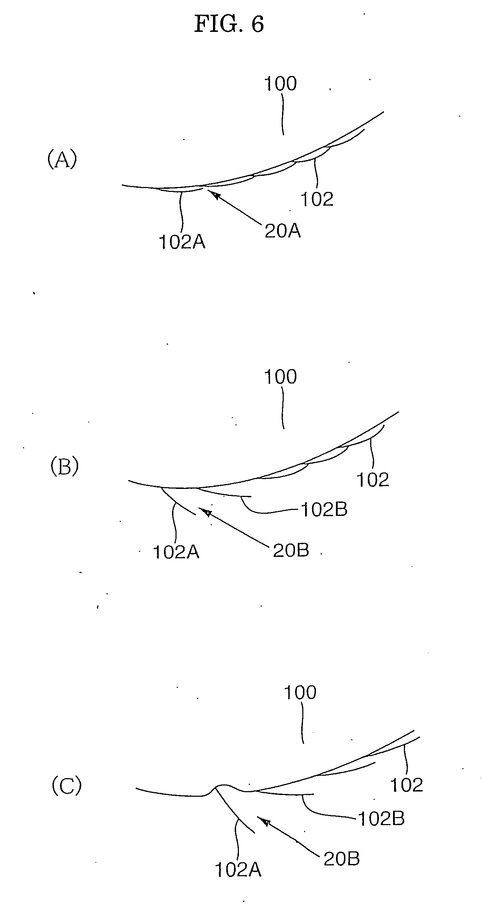

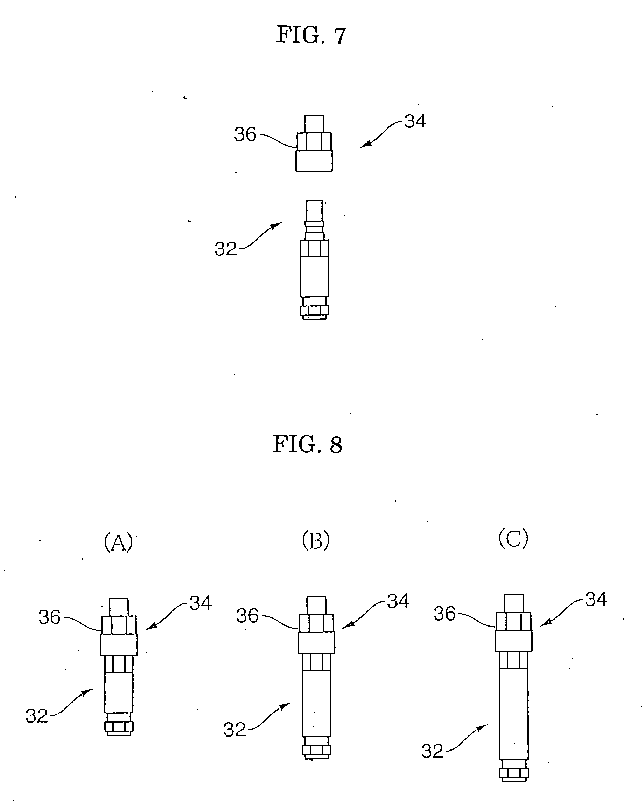

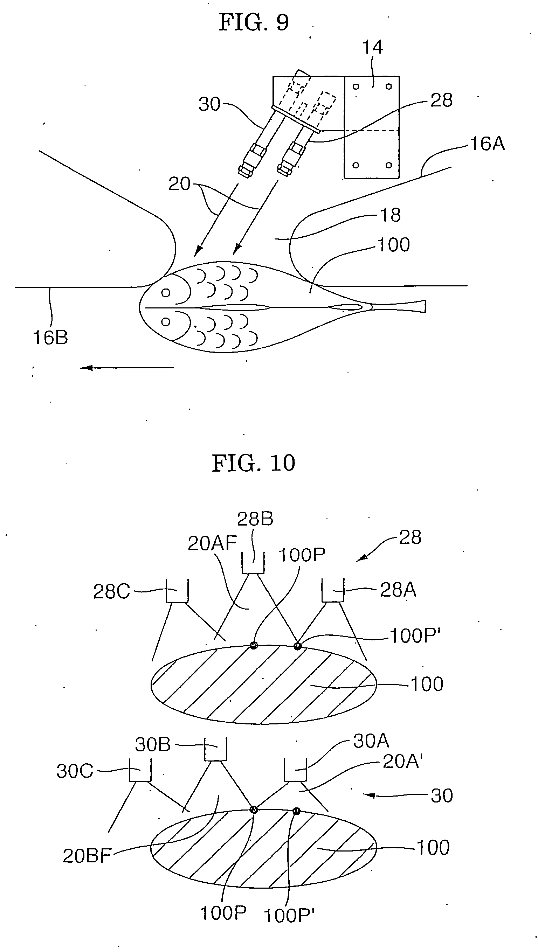

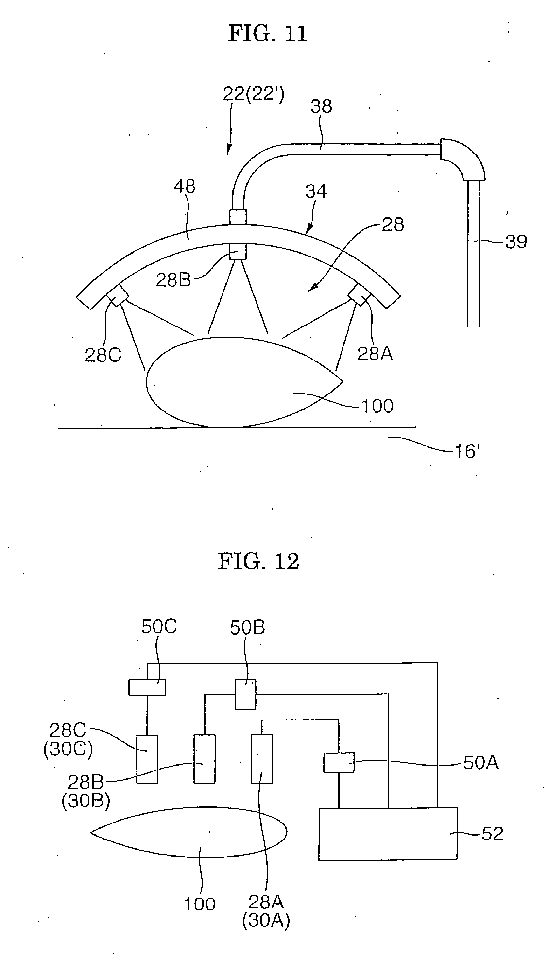

Fig. 1 is a schematic side view of a fish scaling machine according to the invention; Fig. 2 is an enlarged front view of upper main water injection means in the state where it is used for scaling the fish having the relatively flat surface; Fig. 3 is a side view of the water injection means of Fig. 2; Fig. 4 is an enlarged front view of upper main water injection means in the state where it is used for scaling the fish having the curved surface; Fig. 5 is a side view of the water injection means of Fig. 4; Fig. 6 illustrates the state where the scales are removed by the fish scaling machine of the invention wherein Fig. 6A is an enlarged cross sectional view of a surface of a fish body immediately before a water is sprayed from a first injection nozzle, Fig. 6B is an enlarged cross sectional view of the surface of the fish body immediately before a water is sprayed from a next injection nozzle and Fig. 6C is similar to Fig. 6B, but is an enlarged cross sectional view of the surface of the fish body immediately before a water is sprayed from the next injection nozzle in case where there is accompanied a partial recess in a fish meat by the first injection nozzle; Fig. 7 is an enlarged front view of one of the water injection nozzles of the upper main water injection means in an exploded manner; Fig. 8 illustrates the state in which the length of one of the water injection nozzles wherein Fig. 8A is a front view of the shortest water injection nozzle (the opening end of which is at a high position), Fig. 8 B is a front view of the water injection nozzle having the middle length (the opening end of which is at a middle position) and Fig. 8C is a front view of the longest water injection nozzle (the opening end of which is at a low position); Fig. 9 is a side view illustrating the state where the water strikes against the curved surface of the fish body with a uniform pressure by thee forward and rearward water injection nozzles having the different length; Fig. 10 is a schematic front view illustrating the state where the water strikes against the curved surface of the fish body with a uniform pressure by the forward and rearward water injection nozzles disposed in a manner shifted in a width direction; Fig. 11 is a schematic front view of the main water injection means according to another form of embodiment of the invention; and Fig. 12 is a schematic diagram of the main water injection means according to a further form of embodiment of the invention.

### BEST MODE OF EMBODIMENT OF INVENTION

A concrete form of embodiment of the invention will be explained in details with reference to the drawings and the whole fish scaling machine according to the invention are illustrated in Figs. 1 and 2. This fish scaling machine 10 comprises a machine frame 14 having casters 12, upper and lower conveyor means 16 and 16' attached on a horizontal frame 14HF of the machine frame 14 to convey fish bodies 100 (see Fig. 9) to be scaled while being held between them and upper and lower water injection means 22 and 22' to inject high pressure water 20 onto scales 102 of the fish bodies 100 from the right and left sides thereof at discontinuation portions 18 and 18' of the upper and lower conveyor means 16 and 16'.

In the illustrated embodiment, there are further provided with upper and lower auxiliary water injection means 122 and 122' on rightward and leftward sides (those as viewed from the advancing direction of the conveyors 16 and 16') in addition to the upper and lower main water injection means 22 and 22'. The auxiliary water injection means 122 and 122' serve to remove the scales of the back and the belly of the fish body 100, which cannot be fully removed only by the main water injection means 22 and 22'. Since these auxiliary water injection means 122 and 122' correspond to the back and the belly of the fish body having a relatively smaller thickness and spaced from the conveyors of the conveyor means 16 and 16', which will be described later, they may be disposed at the position other than the discontinuation portions 18 and 18' of the upper and lower conveyor means 16 and 16'.

As noted from Fig. 1, the upper and lower conveyor means 16 and 16' comprise front and rear conveyors 16A, 16B and 16A', 16'B, respectively and discontinuation portions 18 and 18' are formed between the front and rear conveyors 16A and 16B and 16'A and 16'B, respectively. The scales 102 of the fish body 100 are exposed at the discontinuation portion 18 and 18'. As shown in this figure, these upper and lower discontinuation portions 18 and 18' may be preferably disposed in a manner shifted forward and backward.

These conveyors 16A, 16B and 16'A, 16'B may comprise a combination of pulleys and net-like belts or a combination of sprocket and chains. In any case, the belts or the chains may be preferably formed of such soft material as never damages the fish body. As shown in Fig. 1, these conveyors 16A, 16B and 16'A, 16'B may be driven through a reduction gear 26 and a not shown transmission mechanism by a motor 24 mounted on the machine frame 14.

Although not shown, the upper and lower conveyor means 16 and 16' may be provided with a distance adjustment mechanism which serves to adjust a distance between them in accordance with the thickness of the fish body to be held between and conveyed by these conveyor means 16 and 16' and also with resilient contact means to resiliently force against the fish body at least the fish body contact surface of each of the conveyors 16A, 16B and 16'A, 16'B of the conveyor means 16 and 16' so as to follow a slight variation in the thickness of the fish body.

As shown in Figs. 1, 3 and 5, the upper and lower main water injection means 22 and 22' may comprise more than two water injection nozzle rows such as forward and backward nozzle rows disposed close to each other in a manner shifted to each other in a direction of conveyance of the fish body 100 (a leftward direction from a rightward direction as viewed in Figs. 1, 3 and 5) to continuously spray more than two stages of high pressure water on the same scale or scales of the fish body 100 from the generally same direction.

As shown in Figs. 2 and 4, each of these forward and backward water injection nozzle rows 28 and 30 may comprise a plurality of water injection nozzles 32 having slit-like injection holes 32a arranged in a width direction of the conveyor to inject a water-knife-like high pressure water 20.

These water injection nozzle rows 28 and 30 are disposed with their injection angle of 20° to 75° , preferably of 45° to 60° and the pressure of water supplied into these water injection nozzle rows 28 and 30 varies on the set distance from the opening end of the nozzle to the surface of the fish body 100, but may be set at 17-18 Kg/cm² if the set distance is 10 cm. This water pressure varies on the kind of the fish that is the condition such as the hardness of the fish or the ease with which the scales are turned over in addition to the distance from the opening end of the nozzle to the fish body.

The fish scaling machine of the invention includes a water pressure adjustment section 34 to apply a uniform water pressure from the water injection nozzle rows 28 and 30 of the upper and lower main water injection means 2 and 22' in spite of the variation in the surface of the fish body 100 to have the scales 102 removed.

One example of the water pressure adjustment section 34 is shown in Figs,, 2 and 4. This water pressure adjustment section 34 sets a constant distance (injection distance) relative to the respective surface portions of the fish body 100 from each of the water injection nozzles 32 so that the water pressure injected from all the injection nozzles of each of the water injection nozzle rows 28 and 30 is uniformed at the respective surface portions of the fish body 100. For this purpose, various water injection nozzles 32 of length different from each other are previously prepared and adapted to be selectively detachably attached through a coupler 36 onto an attachment bracket 14B on the machine frame 14 in the upper water injection means 22 and through a coupler 36 onto a water conduit 39.

The water pressure when the injection water from the water injection nozzle row 28 for the forward stage strikes the fish body 100 and the water pressure when the injection water from the water injection nozzle row 30 for the backward stage strikes the fish body 100 are the same in the example of Figs. 2 and 3. However, as shown in Figs. 4 and 5, the water pressure when the water from the water injection nozzle row 28 for the forward stage strikes the fish body 100 and the water pressure when the water from the water injection nozzle row 30 for the backward stage strikes the fish body 100 may be made different from each other by making different from each other the distance from the opening ends of the water injection nozzles 28A and 30A, 28B and 30B corresponding to the water injection nozzle rows 28 and 30.

Also, as noted from Figs. 2, 4 and 10, more than two water injection nozzle rows 28 and 30 have the respective water injection nozzles 32 disposed in a manner shifted in a width direction. More particularly, the distance between the adjacent water injection nozzles 32 of each of the water injection nozzles 28 and 30 is the same as each other, but as viewed from the front face, the first water injection nozzle 28A of the forward water injection nozzle row 28, the first water injection nozzle 30A of the backward water injection nozzle row 30, the forward water injection nozzle 28B, the backward water injection nozzle 30B, the forward water injection nozzle 28C and the backward water injection nozzle 30C are sequentially arranged in an alternate manner and the distance between the adjacent ones of the water injection nozzles 28A, 30A, 28B, 30B, 28C and 30C are made constant in the width direction.

Each of the water injection nozzles 28A through 28C and 30A through 30C of the water injection nozzle rows 28 and 30 of the upper water injection means 22 is connected through a corresponding hose 38 to the water conduit 39, which is in turn connected to a not shown pressure water supply source. The water injection nozzle rows 28 and 30 of the lower water injection means 22' are connected directly to the water conduits 39 so as to be attached thereto.

Although the details of the right-hand and left-hand auxiliary water injection means 122 and 122' are not shown, these auxiliary water injection means also have the respective water injection nozzles of the water injection nozzle rows 128 and 130 having the projection length varying on the distance from the opening end thereof to the surface of the fish body and the forward and backward water injection nozzles disposed in a manner shifted in the width direction, which is the same as the main water injection means 22 and 22'. In the example of Fig. 1, the water injection nozzle rows 128 and 130 are connected directly to the forward and backward water conduits 139 and 139, respectively so as to be attached thereto, which is the same as the lower main water injection means 22', but may be attached to the bracket and connected through hoses to the water conduits 139 and 139, which is the same as the upper main water injection means 22.

On the machine frame 12 is provided a chute 40 positioned below the lower conveyor means 16' and the chute 40 serves to receive the scales 102 removed from the fish body 100 together with the water 20. A water receptacle 44 having a net cage 42 contained may be provided below an outlet 40a of the chute 40. Thus, the water 20 can flow into a sewer from the water receptacle 44 through the conduit 46 after the scales are removed by the net cage 42.

Next, the use and operation of the fish scaling machine 10 of the invention will be explained with reference to Figs. 2 through 5 and Fig.6.

At first, the projection length of the forward and backward water injection nozzle rows 28 and 30 of the upper and lower main water injection means 22 and 22' in the width direction is set in accordance with the figuration of the fish body 100 from which the scales 102 should be removed. For instance, in case where the fish body such as a flounder or a turbot is relatively flat and has no surface variation, as shown in Figs. 2 and 3, all the water injection nozzles 28A through 28C arranged in the width direction of the water injection nozzle row 28 have the same lower end position while all the water injection nozzles 30A through 30C arranged in the width direction of the water injection nozzle row 30 have the same upper end position. Since the fish body has little thickness variation and the surface not curved, the distance from the opening ends of all the water injection nozzles 28A through 28C and 30A through 30C to the surface of the fish body gets constant in the same upper end or lower end position (the height position) thereof.

On the other hand, in case where the fish body 100 such as young yellow-tail or salmon has the thickness varying in the upward and downward direction (the direction from the back of the fish to the belly thereof or reversely) and therefore has the middle portion highest and the thickness smaller towards the upper and lower end so as to get the curved surface, the middle water injection nozzles 28B and 30B among the water injection nozzles 28A through 28C and 30A through 30C are shortest so as to be drawn outwardly apart from the fish body 100 and on the other hand, the water injection nozzles 28A, 28C and 30A, 30C on both sides are more projected toward the fish body 100 than the water injection nozzles 28B and 30B whereby the distance from the opening ends of all the water injection nozzles 28A through 28C and 30A through 30C to the surface of the fish body 100 (the injection distance) is set to get constant as shown in Fig. 9,.

In the state where the water pressure adjustment section 34 of the upper and lower water injection means 18 and 18' is set in this manner, as the fish body 100 to be scaled is fed into the conveyors 16A and 16B of the upper and lower conveyor means 16 and 16' with the head thereof going ahead as shown in Fig. 9, the fish body 100 is conveyed between these conveyors 16A and 16B and the upper surface of the fish body 100 gets exposed at the discontinuation portion 18 of the conveyors.

With the fish body 100 having the surface exposed at the discontinuation portion 18 of the upper conveyor means 16, the water 20A injected from the first water injection nozzle row 28 among the two water injection nozzle rows 28 and 30 of the upper and lower main water injection means 22 and 22' disposed in a manner shifted in the direction of conveyance of the fish and adjacent to each other is sprayed toward one scale 102A of the fish body 100 as shown in Fig.. 6A and as a result, the one scale 102A on the fish body 100 is turned over and raised as shown in Fig. 6B. If the fish meat is soft, the one scale is vertically or generally vertically raised while the meat 104 is recessed together with the turning over of the scale 102A as shown in Fig. 6C.

As the fish body 100 is conveyed by the conveyor means 16 and 16' in the leftward direction as viewed in Fig. 1 while this state is maintained, the water pressure is applied backward onto the raised portion of the same scale 102A raised by the foregoing injection water 20A by the water 20B injected from the just next water injection nozzle row 30 in the substantially identical direction and therefore, the raised scale 102A is removed as shown in Fig. 6C. In this manner, the scale 102A of the fish body 100 is positively removed from the main body of the fish. Since many scales 102B, 102C --- of the fish body 100 are formed in a manner arranged in the fish conveyance direction, these scales 102B, 102C --- can be sequentially removed as they are conveyed in the same manner. In some cases, the injection waters 20A and 20B practically apply a pressure not only to the one scale 102A, but also to the scale or scales adjacent thereto and therefore the scales can be simultaneously raised and removed.

It should be noted that since the scale or scales 102A, 102B, 102C --are removed by the water continuously injected in two stages, even the low water pressure of 17 - 18 Kg/cm² (this value is of one example and varies on the hardness of the fish body or the ease with which the scale of the fish body is removed as aforementioned) has the same effect as the water injection of the higher water pressure and therefore the fish can be scaled by the lower water pressure without any loss of taste of the fish meat.

Since the distance from the opening end of each of the water injection nozzles 28A through 28C and 30A through 30C to the surface of the fish body 100 can be set at a constant value not only for the fish body 100 having the flat surface, but also for the fish body 100 having the curved surface, the same water pressure can be applied all over the surface of the fish body 100 and therefore, it will be noted that the scales of the fish can be uniformly removed in spite of the curved surface of the fish.

As shown in Fig. 1, in case where there are provided the right-hand and left-hand auxiliary water injection means 122 and 122' together with the main water injection means 22 and 22', also the length of each of the water injection nozzles of the auxiliary water injection means 122 and 122' is adjusted so that the distance from the opening end of each of the water injection nozzles to the surface of the fish (the injection distance) is made constant and similarly, the scales of the back of the fish body 100 and the belly thereof can be uniformly removed.

In addition thereto, since the two water injection nozzle rows 28 and 30 have the water injection nozzles arranged in a manner shifted in the width direction so that the water injection nozzles 28A, 28B and 28C and the water injection nozzles 30A, 30B and 30C alternately appear as viewed from the front face thereof as shown in Figs. 2, 4 and 10, the surface portion 100P of the fish body 100 struck by the water 20 of highest pressure in the center of the spreading fan 20AF from one of the water injection nozzle of the front water injection nozzle row 28, for example the water injection nozzle 28B is struck by the water of lowest pressure applied thereto from the adjacent water injection nozzles on both sides thereof, that are on the left side of the spreading fan 20BF from the water injection nozzle 30A and on right side of the spreading fan 20BF from the water injection nozzle 30B. Reversely, the surface portion 100P' of the fish body 100 struck by the water 20 of lowest pressure on the right side of the spreading fan 20AF from the one water injection nozzle 28B of the forward water injection nozzle row 28 is struck by the water of highest pressure applied thereto in the center of the spreading fan 20BF from the water injection nozzle 30A of the next rear water injection nozzle 30A. Thus, the pressure of water applied onto the same scale from both water injection nozzle rows 28 and 30 gets uniform in combination of the forward and backward water injections and therefore, the scales can be uniformly removed. If every water injection nozzle of the front and rear water injection nozzle rows 28 and 30 is aligned with each other in a forward or backward direction, then there occur in the width direction the surface portion of the fish body where the highest water pressure is always applied and the surface portion of the fish body where the lowest water pressure is always applied. This causes the scales to be unevenly removed, which possibly fails to remove the scales.

In the aforementioned embodiment, the water injection nozzle are of two rows, but may be of three rows or more under the condition in which the rows are set in their position where the water is sprayed continuously onto the same scale of the fish body This can preferably further lower the water pressure.

The fish scaling machine according to another form of embodiment of the invention is illustrated in Fig. 11. In this fish scaling machine, the water pressure adjustment section 34 of each of the water injection nozzle rows 28 (row 30 not shown) of the upper and lower water injection means 22(or 22') includes a water supply conduit 48 curved in the width direction and the water injection nozzles 28A through 28C (or 30A through 30C) are connected to the right end, the middle end and the left end of the water supply conduit 48, respectively so that the distance (the injection distance) from the opening ends of all the water injection nozzles 28A through 28C (or 30A through 30C) to the surface of the fish body 100 is made constant. In this embodiment, various water supply conduits previously curved in accordance with the figuration of the fish body 100 are prepared and the appropriate water supply conduits corresponding to the fish body 100 to be scaled are exchangeably attached onto the bracket 14B (or to appropriate another attachment member) so as to adjust the water pressure. Although not shown, in case where there are provided the auxiliary water injection means, the injection distance (the distance from the opening end of the nozzle to the fish body surface) of the water injection nozzles can be set in the same manner.

The fish scaling machine according to the form of embodiment of Fig.11 can uniformly remove the scales of the fish in spite of change in the surface configuration of the fish in the same manner as that of Fig. 4. In case where the fish is flat like the flounder, the straight one having no curve is selected as the water supply conduiit 48.

In this form of embodiment, every water injection nozzle row is connected through every one hose 38 to a not shown pressure water supply source.

The fish scaling machine according to further form of embodiment of the invention is shown in Fig. 12. This fish scaling machine has all the water injection nozzles 28A through 228C of every water injection nozzle row 28 (or 30) fixed in the same height position and the water pressure adjustment section comprises water pressure adjustment valves 50A through 50C connected between the respective water injection nozzles 28A through 28C and the pressure water supply source 52. This water pressure adjustment section 34 serves to adjust the water pressure in accordance with the distance between the water injection nozzles 28A through 28C and the surface of the fish body 100 to be scaled to accord with the configuration of the fish body so that the water to be injected from all the injection nozzles strikes the respective surface portions of the fish body 100 with a uniform pressure.

More particularly, since the distance between the water injection nozzles 28A and 28C and the corresponding surface portions of the fish body 100 is larger, the output water pressure values of the water pressure adjustment valves 50A and 50C are set larger and since the water injection nozzle 28B and the corresponding surface portion of the fish body 100 is smaller, the output water pressure value of the water pressure adjustment valve 50B is set smaller.

In this manner, with the water pressure for every water injection nozzle adjusted so that the water injected from all the water injection nozzles strikes the respective surface portions of the fish body 100 with a uniform pressure, even though the surface of the fish body 100 is curved due to variation in its thickness, the same water pressure is applied all over the surface thereof and therefore, the scales of the fish can be uniformly removed in spite of the curved surface of the fish.

Also in the form of embodiment of Figs. 11 and 12, forward and backward water injection nozzle rows 28 and 30 (the row 30 not shown) are desirably shifted to each other in a width direction so as to prevent the uneven water pressure applied to the surface of the fish body due to the spread of the injection water as explained with reference to Fig. 10. In case where there is provided the not shown auxiliary water injection means, the injection pressure of the water injection nozzles thereof may be so set as to have a constant pressure applied to the surface of the fish body in the same manner.

### POSSIBILITY OF UTILIZATION IN INDUSTRIES

As aforementioned, the fish scaling machine of the invention can be effectively utilized for uniformly removing the scales of the fish all over the surface thereof for any kind of fish of flat fish such as flounder and round fish such as young yellow-tail.

## Claims

1. A fish scaling machine comprising upper and lower conveyor means (16, 16') attached on a machine frame to convey fish bodies to be scaled while being held between them and water injection means (22 and/or 22') to inject pressure water onto scales (102) of said fish bodies (100) on said conveyor means., said water injection means having more than two rows (28 and 30) of water injection nozzles disposed close to each other in a manner shifted to each other in a direction of conveyance of said fish bodies to continuously spray a water onto the same scale or scales of said fish body in more than two stages in accordance with the conveyance of said fish body from the generally same direction, said water injection means **characterized by** further including water pressure adjustment sections (34) to apply a uniform pressure of water from said two rows of water injection nozzles in spite of variation in the surface of said fish body to be scaled.

2. A fish scaling machine comprising upper and lower conveyor means (16 and 16') attached on a machine frame to convey fish bodies to be scaled while being held between them and water injection means to inject pressure water onto scales (102) of said fish bodies (100) on the conveyor means; said water injection means having more than two rows of water injection nozzles disposed close to each other in a manner shifted to each other in a direction of conveyance of said fish bodies to continuously spray a water onto the same scale or scales of the fish body in more than two stages in accordance with the conveyance of said fish body from the generally same direction; said water injection means **characterized by** further including water pressure adjustment sections (34) to apply a uniform pressure of water from said rows of water injection nozzles in spite of variation in the surface of said fish body to be scaled and said more than two rows of water injection nozzles being disposed in a manner shifted from each other in a width direction.

3. A fish scaling machine as set forth in claim 1 or 2, and wherein said water injection means comprise upper and lower main water injection means located in the position corresponding to both sides of said fish body and upper and lower auxiliary water injection means located in the position corresponding to the back and/or the belly of said fish body.

4. A fish scaling machine as set forth in either of claims 1 through 3, and wherein the pressure when the water injected from the forward and backward water injection nozzle rows of said water injection means is different from each other.

5. A fish scaling machine as set forth in either of claims 1 through 4, and wherein said water pressure adjustment section sets a constant distance from the opening ends of all the water injection nozzles to the respective surface portions of said fish body so that the water sprayed from all the water injection nozzles has the uniform pressure at the respective surface portions of said fish body.

6. A fish scaling machine as set forth in claim 5, and wherein said water injection adjustment section sets said constant distance by selectively using a plurality of water injection nozzles previously prepared and having length different from each other.

7. A fish scaling machine as set forth in claim 5, and wherein said water injection adjustment section sets said constant distance by selectively using a plurality of water supply conduits (48) having the water injection nozzle connected thereto in a manner spaced in a longitudinal direction and having curvature different from each other or straightness.

8. A fish scaling machine as set forth in either of claims 1 through 4, and wherein said water pressure adjustment section adjust a water pressure so that the pressure water sprayed from all the water injection nozzles has the uniform pressure at the respective surface portions of said fish body.

9. A fish scaling machine as set forth in claim 8, and wherein said water injection adjustment section includes pressure adjustment valves (50A, 50B and 50C) separately provided between said respective water injection nozzles and said pressure water supply source and said pressure adjustment valves have an output water pressure value adjusted in accordance with the surface configuration of said fish body.
